# EUROPÄISCHE PATENTSCHRIFT

(11) **EP 2 420 685 B1**
(45) Veröffentlichungstag und Bekanntmachung des Hinweises auf die Patenterteilung: **26.06.2013**
(21) Anmeldenummer: 11176324.9
(22) Anmeldetag: 02.08.2011
(51) Int. Cl.: F16B 37/04

(54) **Profilnutanschlussverbinder sowie Anordnung mit einem solchen Verbinder**
Profile nut connector and assembly with such a connector
Connecteur de raccordement de rainures profilées ainsi qu'agencement doté de ce type de connecteur

(30) Priorität: 19.08.2010 DE 202010008312 U
(43) Veröffentlichungstag der Anmeldung: 22.02.2012
(73) Patentinhaber: SIGN-WARE GmbH & Co. KG, 59846 Sundern (DE)
(72) Erfinder: Vollmer, Gerd, 59846 Sundern (DE)
(74) Vertreter: Haverkamp, Jens

(56) Entgegenhaltungen:
- DE-B1- 2 440 454
- DE-U1-202009 002 005

## Beschreibung

Die Erfindung betrifft einen Profilnutanschlussverbinder, umfassend einen Verbinder mit einem Kopfstück, ausgeführt zum Eingreifen in eine hinterschnittene Nut eines Profils und zum Einbringen des Kopfstückes in den Hinterschnitt der Nut durch die der Längserstreckung des Profils folgende Nutöffnung, und mit Mitteln zum Anschließen eines Gegenstandes an den Profilnutanschlussverbinder, sowie umfassend ein Sicherungselement mit zumindest einem zum Eingreifen in die Nut vorgesehenen Riegel zum Sichern des in den Hinterschnitt der Nut eingesetzten Kopfstückes.

Derartige Anschlussverbinder werden zum Anschließen von Gegenständen an Trägerprofile verwendet, wie diese beispielsweise im Messebau, Ladenbau oder in der Bühnentechnik eingesetzt werden. Derartige Trägerprofile verfügen über zumindest eine ihrer Längserstreckung folgende Nut, in der an dem Trägerprofil zu befestigende Gegenstände verankert werden. Mehrere derartiger Trägerprofile sind typischerweise zu konstruktiven Gebilden miteinander verbunden. Die Profilnutanschlussverbinder werden als Kupplungsglieder bzw. Anschlusspunkte eingesetzt, um an ein solches Trägerprofil einen Gegenstand anschließen zu können. Mithin dienen derartige Profilnutanschlussverbinder zum Bereitstellen einer Befestigungsmöglichkeit an der Außenseite eines solchen Profils. An die Profilnutanschlussverbinder werden beispielsweise Leuchten, Stützen, auszustellende Gegenstände oder Plakate (Prints) angeschlossen, wobei dieses nur eine kleine Auswahl einer Vielzahl von Möglichkeiten darstellt, derartige Profilnutanschlussverbinder einsetzen zu können.

Derartige Profilnutanschlussverbinder verfügen über ein Kopfstück, welches zum Eingreifen in die hinterschnittene Nut eines solchen Trägerprofils konzipiert ist. An das Kopfstück angeformt ist ein bezüglich seiner Breite in Bezug auf das Kopfstück schmaler gehaltene Halsabschnitt, dessen Breite im Wesentlichen der lichten Weite der Nutöffnung entspricht. An den Halsabschnitt angeformt ist wiederum ein Schaft, ausgerüstet mit ein oder mehreren Mitteln zum Anschließen eines Gegenstandes. Als solches Mittel kann beispielsweise ein Außengewinde vorgesehen sein, so dass der Schaft bei einer solchen Ausgestaltung als Gewindestange ausgebildet ist. Ein an das Profil mittels eines solchen Profilnutanschlussverbinders anzuschließender Gegenstand wird sodann auf dieser Gewindestange montiert.

Neben solchen Profilnutanschlussverbindern, die in die stirnseitig offene Nut eines solchen Profils eingesetzt werden, sind auch Profilnutanschlussverbinder bekannt geworden, die die hinterschnittene Nut des Profils nur halbseitig hintergreifen. Diese Profilnutanschlussverbinder können in die hinterschnittene Nut eines solchen Profils eingesetzt werden, auch nachdem dieses mit anderen Profilen oder anderen Bauteilen verbunden ist und die Nuten stirnseitig nicht mehr zugänglich sind. Derartige Profilnutanschlussverbinder werden aufgrund ihres länglichen Kopfstückes auch als Hammerkopfschrauben bezeichnet und verfügen über ein einseitig an dem Halsabschnitt angeformtes Kopfstück. Dieses ist gegenüber der Längsachse des Schaftes abgewinkelt angeordnet. Die Längsachse des Kopfstückes selbst verläuft parallel zur Längsachse des Schaftes. Damit hat ein solcher vorbekannter Profilnutanschlussverbinder in einer Seitenansicht ein hakenförmiges Aussehen. Das abgewinkelte Kopfstück dient zum Eingreifen in einen der beiden durch die Nut bereitgestellten Hinterschnittseiten. Damit greift ein solches Kopfstück nur halbseitig in den durch die Nut bereitgestellten Hinterschnitt ein. Die maximale Breite des Kopfstückes und des daran angeformten Halsabschnittes überschreitet die lichte Öffnungsweite der Nut des Profils nicht, in das ein solcher Profilnutanschlussverbinder eingesetzt werden soll. Eingesetzt wird das Kopfstück im Wege einer Schwenkbewegung, bei der zunächst die Seitenfläche des Kopfstückes in die Nutöffnung eingeführt und anschließend der Profilnutanschlussverbinder gegenüber der Oberfläche des Profils aufgerichtet wird, bis dessen Schaft typischerweise rechtwinklig zur Oberfläche des Profils ausgerichtet ist. Zum Sichern eines solchen Profilnutanschlussverbinders in seiner in eine Nut eingesetzten Stellung dient ein Sicherungselement, welches eine auf den mit einem Gewinde ausgestatteten Schaft aufgeschraubte Mutter ist. Diese ist unter Zwischenschaltung einer Beilagscheibe so weit in Richtung zu dem Halsabschnitt auf den Schaft aufgeschraubt, dass eine Schwenkbewegung des Profilnutanschlussverbinders in einer seiner Einsetzschwenkbewegung entgegengesetzten Richtung verhindert ist. Um dieses zu gewährleisten, können derartige Profilnutanschlussverbinder nur bei solchen Profilen eingesetzt werden, die eine ebene außenseitige Nutbegrenzungsfläche aufweisen. Ein Einsatz derartiger Profilnutanschlussverbinder bei mit einer hinterschnittenen Nut ausgestatteten Rundprofilen ist daher grundsätzlich nicht möglich.

Von Nachteil bei dem vorstehenden Stand der Technik ist des Weiteren, dass Gegenstände typischer Weise erst dann an den Schaft des Profilnutanschlussverbinders angeschlossen werden können, wenn dieser in die Nut eines Trägerprofils eingreifend festgesetzt ist. Dieses gilt vor allem dann, wenn ein Gegenstand mit mehreren Profilnutanschlussverbindern an ein Profil oder an ein aus mehreren Profilen gebildeten Konstruktion, etwa einen Rahmen angeschlossen werden soll. Eine Vormontage der Profilnutanschlussverbinder an den zu montierenden Gegenstand ist nicht möglich, da die notwendige Schwenkbewegung zum Eindringen der Kopfstücke in die eine oder die mehreren Nut des oder der Trägerprofile dann nicht mehr durchgeführt werden kann.

Ausgehend von diesem diskutierten Stand der Technik liegt der Erfindung daher die Aufgabe zugrunde, einen eingangs genannten Profilnutanschlussverbinder insoweit zu verbessern, dass vor allem eine Montage desselben an ein Trägerprofil möglich ist, auch wenn an den zu montierenden Gegenstand mehrere Profilnutanschlussverbinder vormontiert angeschlossen sind.

Gelöst wird diese Aufgabe erfindungsgemäß durch einen eingangs genannten, gattungsgemäßen Profilnutanschlussverbinder, bei dem das Kopfstück als Wendel mit zumindest einem auskragenden Wendelflügel ausgeführt ist, dessen Spannweite größer und dessen Stärke kleiner als die lichte Weite der Öffnung der Nut und dessen Höhe kleiner als die lichte Höhe des Hinterschnittes der Nut ist, und bei dem zum Sichern des in den Hinterschnitt der Nut eingreifenden Kopfstückes des zumindest einen Riegels des Sicherungselementes mit zumindest einem auskragenden Wendelflügel zusammenwirkt.

Bei diesem Profilnutanschlussverbinder ist das Kopfstück als Wendel, typischer Weise mit zwei einander diametral gegenüberliegenden Wendelflügeln ausgeführt. Die Spannweite der Wendel mit ihrem zumindest einen Flügel ist größer als die lichte Weite der Öffnung der Nut. Die Stärke der Wendel ist dagegen kleiner als die lichte Weite der Nutöffnung. Mithin kann diese ohne weiteres durch die Nutöffnung in den Hinterschnitt der Nut eingebracht werden. Aufgrund der Konzeption des Kopfstückes als Wendel wird dieses im Unterschied zum Stand der Technik durch eine Drehbewegung und nicht durch eine Kippbewegung in den Hinterschnitt der Nut eingebracht. Dabei ist vorgesehen, dass die Wendel derart konzipiert ist, dass die Drehbewegung derselben zum Einbringen des Kopfstückes in den Hinterschnitt der Nut um die Achse des Schaftes des Profilnutanschlussverbinders erfolgt. Folglich können somit ohne weiteres Gegenstände an ein Trägerprofil angeschlossen werden, an denen bereits mehrere Profilnutanschlussverbinder vormontiert angeschlossen sind. Es ist lediglich sicherzustellen, dass die an den zu montierenden Gegenstand angeschlossenen Profilnutanschlussverbinder um die Achse des Schaftes drehbar sind.

Vorzugsweise ist die Oberseite des oder der Flügel des Kopfstückes der Innenkontur der Nut angepasst.

Zum Einbringen des Kopfstückes ist es grundsätzlich nicht erforderlich, dass der Profilnutanschlussverbinder aktiv in eine Drehbewegung versetzt wird. Eine Drehbewegung resultiert bereits aus der Konzeption der Wendel, wenn diese mit ihrem Fuße in die Nutöffnung eingesetzt und der Profilnutanschlussverbinder allein mit einer axialen Kraft beaufschlagt ist. Somit dreht sich bei einer solchen Kraftbeaufschlagung das Kopfstück selbsttätig in den Hinterschnitt der Nut des Trägerprofils ein.

Zum Sichern des in den Hinterschnitt der Nut eingreifenden Kopfstückes dient der zumindest eine Riegel des Sicherungselementes, der mit einem auskragenden Wendelflügel zusammen wirkt, und zwar typischer Weise nach Art eines Anschlages. Durch den mit dem Wendelflügel zusammenwirkenden Riegel des Sicherungselementes ist ein Zurückdrehen des Kopfstückes blockiert und somit der Profilnutanschlussverbinder nach Fixieren des Sicherungselementes unverlierbar an das Trägerprofil angeschlossen.

Von weiterem Vorteil dieses Profilnutanschlussverbinders ist, dass dieser an Profile mit einer hinterschnittenen Nut mit quasi beliebiger Geometrie der äußeren Mantelfläche angeschlossen werden kann.

Das Sicherungselement dieses Profilnutanschlussverbinders ist zweckmäßigerweise ausgestaltet, wie dasjenige, welches im Zusammenhang mit einem Profilnutanschlussverbinder in DE 20 2009 002 005 U1 derselben Anmelderin beschrieben ist.

In einer bevorzugten Ausgestaltung ist vorgesehen, dass die Spannweite der Wendelflügel etwas größer ist als die lichte Breite des Hinterschnitts der Nut des Trägerprofils. Auf diese Weise ist die Eindrehbewegung des wendelartig ausgeführten Kopfstückes begrenzt.

Gemäß einer Ausgestaltung ist vorgesehen dass der oder die Riegel des Sicherungselementes und/oder die mit dem oder den Riegel zusammenwirkenden Anschlagflächen des Kopfstückes geneigt sind, und zwar derart, sodass das Einbringen des oder der Riegel durch die Nutöffnung hindurch nach Art eines Keils auf die Wendel wirkt und diese aufgrund des Übermaßes der Flügelspannweite in Bezug auf die lichte Breite der Nut innerhalb des Hinterschnittes verklemmt.

Gemäß einer Ausgestaltung der Erfindung ist an das Kopfstück ein Schaft angeformt, der aus der Nut des Trägerprofils herausragt. Dieser kann als Gewindeschaft ausgebildet sein und dient zum einen zum Festsetzen des Sicherungselementes und zum anderen zum Anschließen eines Gegenstandes an den Profilnutanschlussverbinder. Festgesetzt und dadurch an das Trägerprofil angeschlossen wird der Profilnutanschlussverbinder bei einer solchen Ausgestaltung mittels einer Mutter. Diese wirkt auf das Sicherungselement, welches sich an der Außenseite des Profils abstützt. Das Kopfstück bildet das Widerlager zu der Abstützung des Sicherungselementes an der Außenseite des Profils, sodass auf diese Weise der Profilanschlussverbinder an den die Nut begrenzenden Bereichen des Trägerprofils verspannt gehalten ist.

Gemäß einer alternativen Ausgestaltung kann anstelle einer Mutter, die auf einen Gewindeschaft aufgefädelt ist, eine Verspannung in derselben Art unter Zuhilfenahme eines Exzenters oder eines Verriegelungskeils vorgenommen werden. Es versteht sich, dass dann der an das Kopfstück angeformte Schaft nicht als Gewindeschaft ausgebildet zu sein braucht. Gleichwohl kann der Schaft einen äußeren Endabschnitt mit einem Gewinde aufweisen, welcher Gewindeendabschnitt sodann als Mittel zum Anschließen eines oder mehrerer Gegenstände an den Profilnutanschlussverbinder dient.

Neben einer Ausgestaltung, bei der ein solcher Profilnutanschlussverbinder variabel eingesetzt werden kann, in den dieser über Mittel zum Anschließen von Gegenständen verfügt, beispielsweise ein Gewindeschaft oder dergleichen, ist gemäß einer weiteren Ausgestaltung vorgesehen, dass der Profilnutanschlussverbinder integraler Bestandteil eines funktionstragenden Bauteils ist. Hierbei kann es sich beispielsweise um einen Halter, eine Platte, ein Scharnier, einen Haken oder dergleichen handeln.

Mit dem vorbeschriebenen Konzept ist es möglich, nicht nur das Trägerprofil als Träger für weitere Gegenstände zu nutzen, sondern die Profilnutanschlussverbinder einzusetzen, um das Trägerprofil selbst an einen anderen Gegenstand anzuschließen und/oder an diesem zu halten.

Darüber hinaus ist es möglich, in die Verbindung von Profilnutanschlussverbinder und Profil ein oder mehrere weitere Gegenstände einzuschalten und diese auf diese Art und Weise an das Profil anzuschließen bzw. mit diesem zu verbinden. Sind diese zwischen dem Trägerprofil und dem Sicherungselement eingeschaltet, versteht es sich, dass derartige, an das Trägerprofil anzuschließende Gegenstände über ein Langloch verfügen, durch das der oder die Riegel des Sicherungselementes hindurch greifen, um in die Nut des Trägerprofils eingreifen zu können.

Nachfolgend ist die Erfindung anhand von Ausführungsbeispielen unter Bezugnahme auf die beigefügten Figuren beschrieben. Es zeigen:
- **Fig. 1a, 1b:**: Eine perspektivische Ansicht (Figur 1a) und eine Seitenansicht (Figur 1 b) eines an ein Trägerprofil angeschlossenen Profilnutanschlussverbinders,
- **Fig. 2a, 2b:**: In einer perspektivischen Darstellung nach Art von Explosionsdarstellungen der Profilnutanschlussverbinder der Figur 1, betrachtet aus zwei unterschiedlichen Richtungen,
- **Fig. 3a, 3b:**: Darstellungen entsprechend derjenigen Figuren 1a, 1b, darstellend einen ersten Montageschritt zum Anschließen des Profilnutanschlussverbinders an das Trägerprofil,
- **Fig. 4a, 4b:**: Der Anschlussvorgang des Profilnutanschlussverbinders der Figuren 3a, 3b in einem weiteren Schritt,
- **Fig. 5a, 5b:**: Der Anschlussvorgang des Profilnutanschlussverbinders der Figuren 4a, 4b in einem weiteren Schritt,
- **Fig. 6a, 6b:**: Der Anschlussvorgang des Profilnutanschlussverbinders der Figuren 5a, 5b in einem weiteren Schritt,
- **Fig. 7a, 7b:**: Der mit seinem Kopfstück in den Hinterschnitt des Träger-profils eingebrachte Profilnutanschlussverbinder vor dem Anschließen eines Sicherungselementes,
- **Fig. 8:**: Eine perspektivische Darstellung des in der Nut des Trägerprofils festgesetzten Profilnutanschlussverbinders, dargestellt ohne das Trägerprofil,
- **Fig. 9:**: Eine perspektivische Darstellung, prinzipiell entsprechend derjenigen der Figur 8, mit einem weiteren Ausführungsbeispiel eines Profilnutanschlussverbinders,
- **Fig. 10:**: Der Profilnutanschlussverbinder der Figur 9 eingesetzt in ein Trägerprofil,
- **Fig. 11:**: Eine perspektivische Darstellung eines weiteren Profilnutanschlussverbinders,
- **Fig. 12:**: Der Profilnutanschlussverbinder der Figur 11, eingesetzt in ein Trägerprofil,
- **Fig. 13a-13c:**: Profilnutanschlussverbinder gemäß noch weiteren Ausführungsbeispielen in jeweils einer perspektivischen Ansicht und
- **Fig. 14:**: Eine beispielhafte Anordnung eines Trägerprofils mit daran mittels Profilnutanschlussverbindern angeschlossener Leisten.

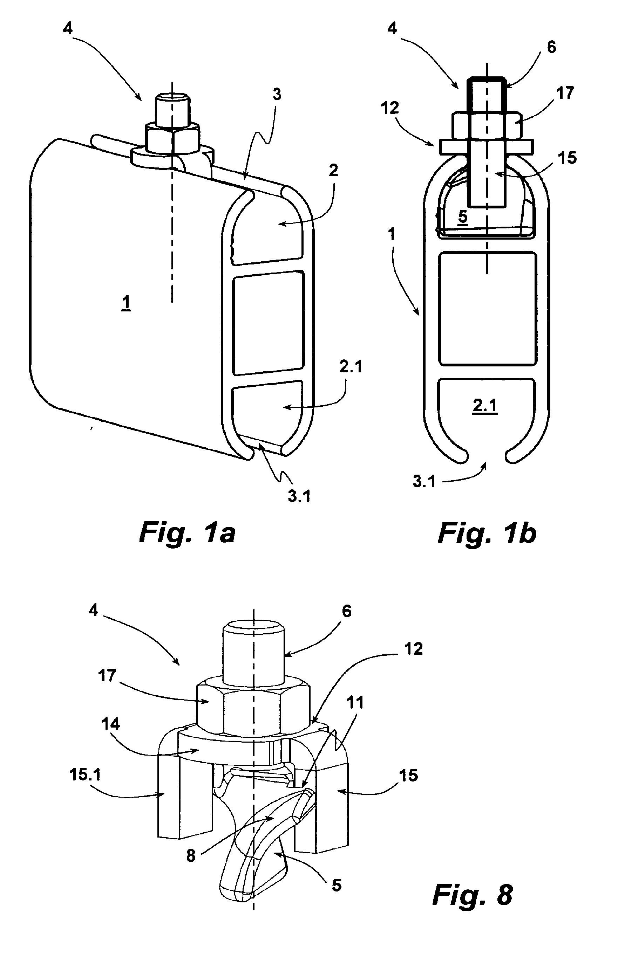

Figuren 1a, 1b zeigen ein Trägerprofil 1, welches aneinander gegenüberliegend zwei Kederkanäle 2, 2.1 aufweist. Bei den Kederkanälen 2, 2.1 handelt es sich um hinterschnittene, der Längserstreckung des Trägerprofils 1 folgende Kanäle, wie aus der Figur erkennbar. Die Kanäle 2, 2.1 weisen jeweils eine der Längserstreckung des Trägerprofils 1 folgende Nutöffnung 3, 3.1 auf. Die lichte Weite der Nutöffnungen 3, 3.1 ist deutlich geringer als die innere Breite des jeweiligen Kederkanals 2, 2.1. Das Trägerprofil 1 ist beispielsweise Teil einer im Übrigen nicht näher dargestellten Profilkonstruktion, gebildet aus mehreren derartiger Profile, an die ein Gegenstand angeschlossen werden soll. Bei dem dargestellten Ausführungsbeispiel dient der Kederkanal 2 als Befestigungs- bzw. Anschlussnut zum Anschließen von Profilnutanschlussverbindern. Beispielhaft ist in Figur 1 ein Profilnutanschlussverbinder 4, angeschlossen an das Trägerprofil 1 dargestellt. Der Profilnutanschlussverbinder 4 dient als Anschlusspunkt zum Anschließen eines oder mehrerer Gegenstände.

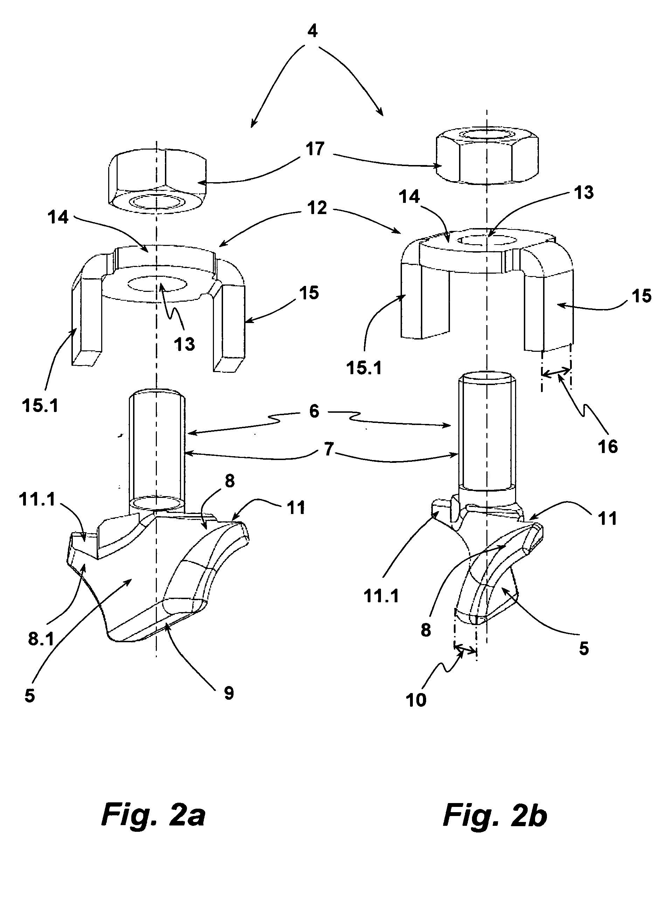

Der Profilnutanschlussverbinder 4 ist aus den perspektivischen Ansichten der Figuren 2a, 2b hinsichtlich seiner Einzelheiten besser erkennbar. Der Profilnutanschlussverbinder 4 umfasst ein nach Art einer Wendel ausgeführtes Kopfstück 5. Angeformt an das Kopfstück 5 ist ein Schaft 6, der bei dem dargestellten Ausführungsbeispiel ein Außengewinde 7 trägt. Der Schaft 6 dient als Befestigungselement zum Anschließen eines Gegenstandes.

Das wendelartig konzipierte Kopfstück 5 des dargestellten Ausführungsbeispiels verfügt über zwei Wendelflügel 8, 8.1. Die Wendelflügel 8, 8.1 sind einander bezüglich der Längsachse des Profilnutanschlussverbinders 4 diametral gegenüberliegend zueinander angeordnet. Ausgehend von dem Fuß 9 des Kopfstückes 5 nimmt die Steigung in den Wendelflügeln 8, 8.1 in Richtung zum schaftseitigen Abschluss des Kopfstückes 5 ab. Die Wendel selbst erstreckt sich über etwa 80 Grad. Die Materialstärke 10 des Kopfstückes 5 ist kleiner als die lichte Weite der Nutöffnung 3. Dieses ist erforderlich, damit das Kopfstück 5 durch die Nutöffnung 3 hindurch in den Hinterschnitt des Kederkanals 2 eingedreht werden kann. Die Spannweite des Kopfstückes 5 ― der Abstand des radialen äußeren Abschlusses des Wendelflügels 8 von demjenigen des Wendelflügels 8.1 ― ist größer als die lichte Weite der Nutöffnung 3 und bei dem dargestellten Ausführungsbeispiel ebenfalls größer als die lichte Breite des Hinterschnitts des Kederkanals 2. Die Materialstärke 10 bleibt über die axiale Erstreckung der Wendel vom Fuß 9 bis zum oberen Abschluss derselben hin gleich.

Die beiden Wendelflügel 8, 8.1 verfügen im Bereich ihres oberen Abschlusses jeweils über eine Anschlagfläche 11, 11.1. Ist das Kopfstück 5 in den Kederkanal 2 eingedreht, befinden sich die Anschlagflächen 11, 11.1 bei dem dargestellten Ausführungsbeispiel in etwa fluchtend mit den profilseitigen Begrenzungen der Nutöffnung 3.

Der Profilnutanschlussverbinder 4 umfasst des Weiteren ein Sicherungselement 12. Dieses besteht aus einer mit einer zentralen Durchbrechung 13 versehenen Scheibe, an die einander diametral gegenüberliegend zwei Riegel 15, 15.1, aus der Ebene der Scheibe 14 in Richtung zum Kopfstück 5 angekantet, angeformt sind. Die Breite 16 der Riegel 15, 15.1 des Sicherungselementes 12 ist um das notwendige Spiel zur Montage des Sicherungselementes 12 geringer als die lichte Weite der Nutöffnung 3. Der Abstand der Riegel 15, 15.1 des Sicherungselementes 12 ist dergestalt ausgeführt, dass jeder Riegel 15 bzw. 15.1 mit einer seiner Schmalseiten an der Anschlagfläche 11 bzw. 11.1 des wendelartigen Kopfstückes 5 anliegt bzw. daran zur Anlage gebracht werden kann.

Fixiert wird das Sicherungselement 12 auf dem Schaft 6 mit seinem Außengewinde 7 mittels einer Mutter 17.

Da das Sicherungselement 12, wenn mit seinen Riegeln 15, 15.1 in die Nutöffnung 3 eingreifend, verdrehgesichert gehalten ist und da die Riegel 15, 15.1 fluchtend in Bezug auf eine Drehbewegung des Kopfstückes 5 in der Spur der Anschlagflächen 11, 11.1 angeordnet sind, bilden diese einen Anschlag für das Kopfstück 5 und somit eine wirksame Drehsicherung gegenüber diesem, sodass dieses, wenn das Sicherungselement 12 fixiert ist, nicht mehr aus dem Kederkanal 2 herausgedreht werden kann.

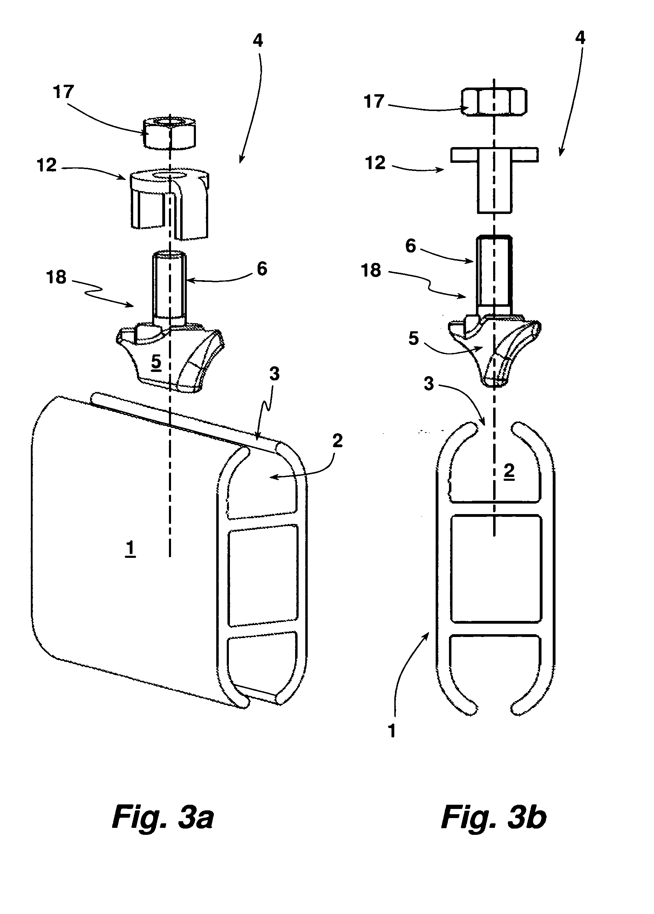

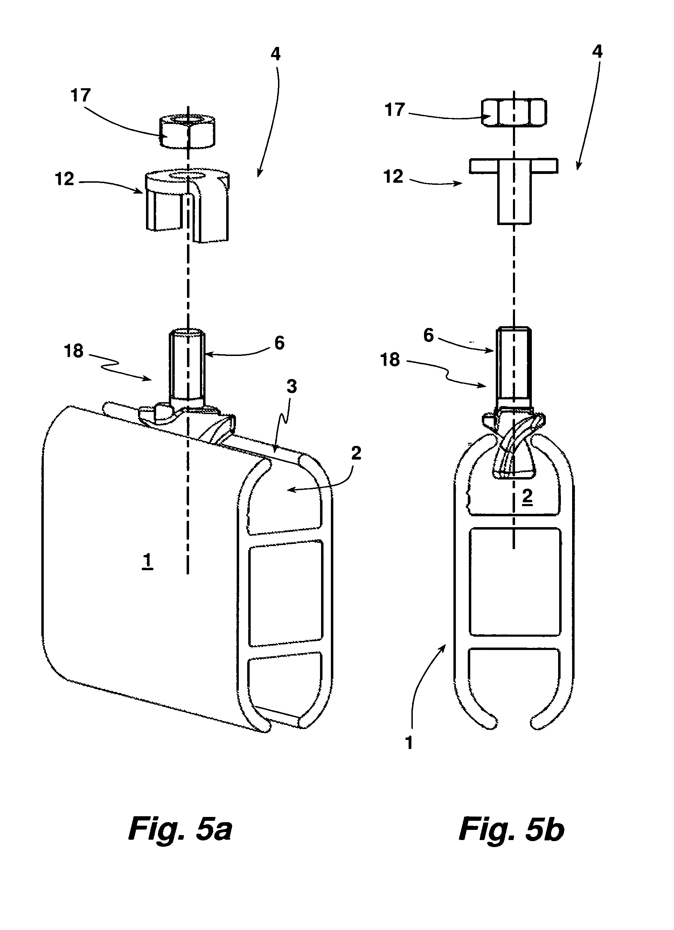

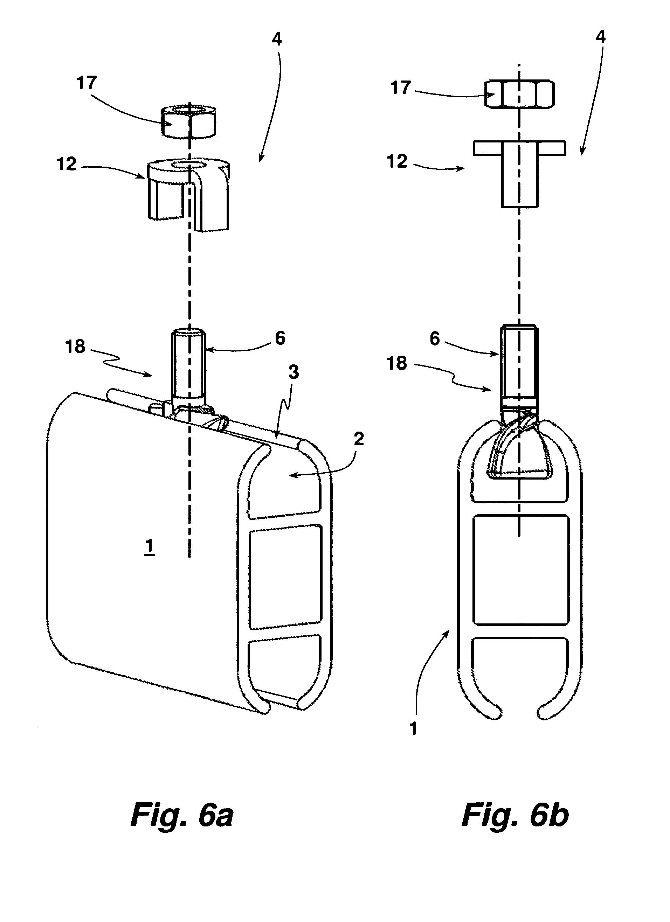

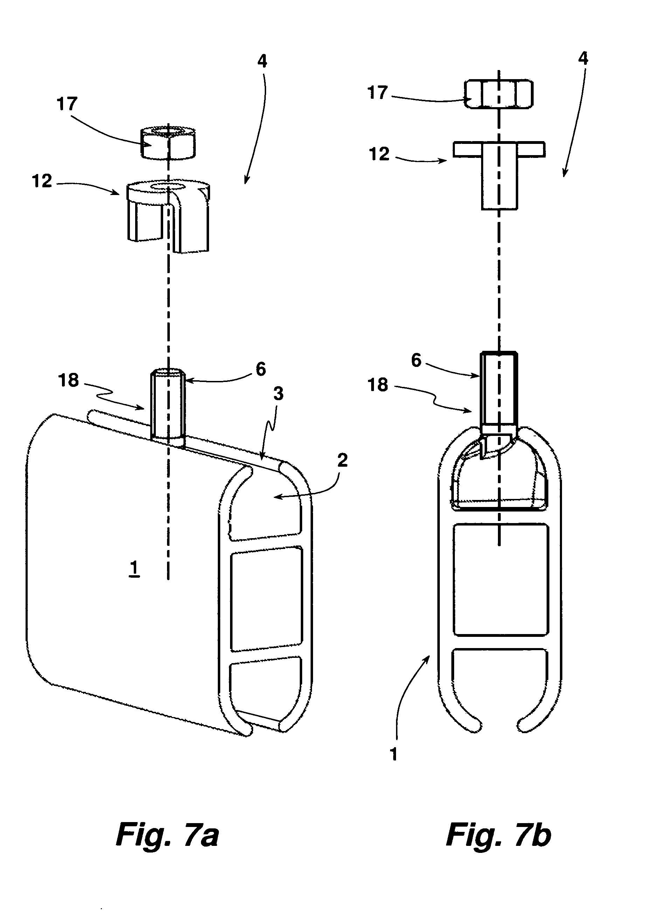

Zum Anschließen des Profilnutanschlussverbinders 4 an das Trägerprofil 1 wird zunächst der aus dem Kopfstück 5 und dem daran angeformten Schaft 6 bestehende Verbinder 18 durch die Nutöffnung 3 in den Kederkanal 2 eingeführt. Eine Ausgangsstellung zum Anschließen des Profilnutanschlussverbinders 4 an das Trägerprofil 1 ist in den Figuren 3a, 3b gezeigt. In einem ersten Schritt wird der Verbinder 18 mit dem Fuß 9 des Kopfstückes 5 in die Nutöffnung 3 eingesetzt. Durch Drehen desselben oder auch allein durch axiale Kraftbeaufschlagung desselben wird das wendelartig konzipierte Kopfstück 5 sukzessive durch die Nutöffnung 3 in den Hinterschnitt des Kederkanals 2 eingebracht. Dabei dreht sich der Verbinder 18 im Uhrzeigersinne um die Achse des Schaftes 6. Das im Zuge des Montagevorganges sukzessive Drehen des Kopfstückes 5 zum Einbringen desselben in den Hinterschnitt des Kederkanals 2 wird aus den Darstellungen der Figuren 5a, 5b, 6a, 6b und 7a, 7b deutlich. Der Verbinder 18 ist ausgehend von der Darstellung in den Figuren 3a, 3b um etwa 80 Grad gedreht worden, um in seine in Figuren 7a, 7b gezeigte Endstellung zu gelangen.

Da die Spannweite des Kopfstückes 5 größer ist als die licht Innenbreite des Kederkanals 2 wirken in der in der in Figuren 7a, 7b gezeigten Stellung des Verbinders 18 die radialen Außenseiten der Wendelflügel 8, 8.1 gegen die Innenwand des Kederkanals 2. Figur 7b zeigt, dass die Oberseite der Wendelflügel 8, 8.1 an die Innenkontur des Kederkanals 2 angepasst ist. Eine Krafteinleitung erfolgt somit von dem Profilnutanschlussverbinder 4 in das Trägerprofil 1 zumindest über einen Linienkontakt. Die Anschlussstellen sind daher auch mit hohen Kräften belastbar.

Zum Sichern des Verbinders 18 in seiner in den Figuren 7a, 7b gezeigten Stellung wird anschließend das Sicherungselement 12 mit seinen Riegeln 15, 15.1 auf den Schaft 6 des Verbinders 18 aufgesetzt und in Richtung zum Kopfstück 5 verschoben, sodass die Riegel 15, 15.1 durch die Nutöffnung 3 hindurchgreifen. Fixiert wird das Sicherungselement 12 durch Aufschrauben der Mutter 17 auf das Außengewinde 7 des Schaftes 6. Der an das Trägerprofil 1 in dieser Form angeschlossene Profilnutanschlussverbinder 4 ist in den Figuren 1a, 1b gezeigt. Figur 1b zeigt die Anschlaganordnung zwischen dem Riegel 15 des Sicherungselementes 12 und der Anschlagfläche 11 des Kopfstückes 5.

Figur 8 zeigt die Anordnung zwischen dem Verbinder 18 und dem Sicherungselement 12 bzw. dessen Riegel 15, 15.1, wenn der Profilnutanschlussverbinder 4 an das Trägerprofil 1 angeschlossen ist.

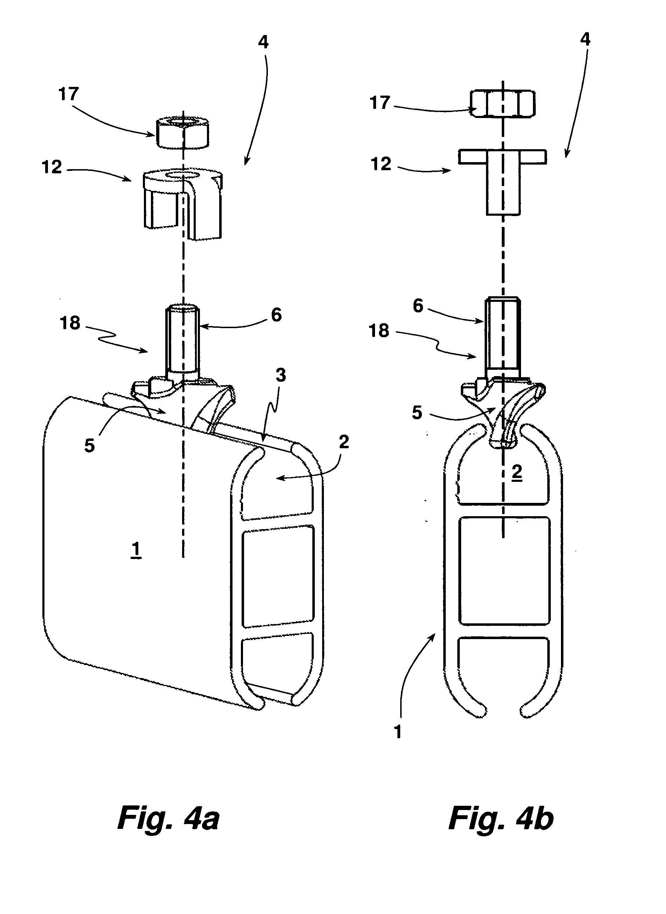

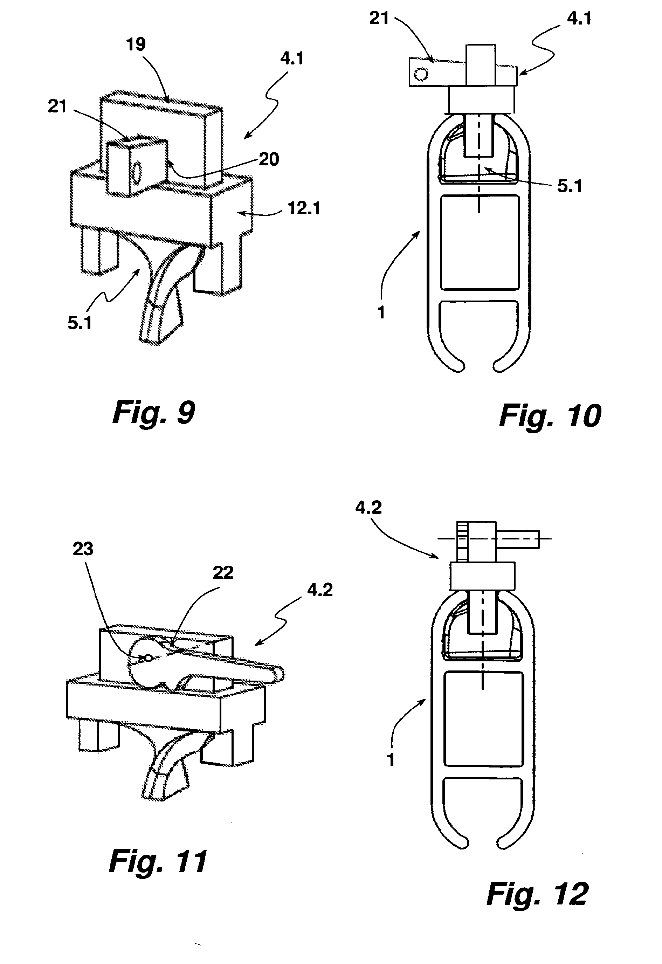

Figur 9 zeigt in einer perspektivischen schematisierten Ansicht einen weiteren Profilnutanschlussverbinder 4.1. Dieser ist prinzipiell aufgebaut wie der Profilnutanschlussverbinder 4 des Ausführungsbeispiels der vorangegangenen Figuren. Im Unterschied zu dem Profilnutanschlussverbinder 4 ist bei dem Profilnutanschlussverbinder 4.1 an das Kopfstück 5.1 ein Steg 19 angeformt. Der Steg 19 dient als Mittel zum Anschließen eines Gegenstandes an den Profilnutanschlussverbinder oder als Verbindungsglied für ein solches Mittel. Der Steg 19 verfügt über eine Durchbrechung 20. Zum Verspannen des Profilnutanschlussverbinders 4.1 an einem Trägerprofil dient ein Keil 21, der zu diesem Zweck durch die Durchbrechung 20 des Profilnutanschlussverbinders 4.1 hindurch gesteckt und darin festgesetzt wird, und zwar unter Zwischenschaltung eines Sicherungselementes 12.1. Das Sicherungselement 12.1 verfügt ebenso wie das Sicherungselement 12 über zwei abgekantete Riegel, an die die Wendelflügel des Kopfstückes 5.1, wie dieses zu dem Ausführungsbeispiel der Figuren 1 bis 8 beschrieben ist, anschlagen.

Figur 10 zeigt in einer Seitenansicht entsprechend derjenigen der Figur 1b den Profilnutanschlussverbinder 4.1, angeschlossen an das Trägerprofil 1. Das Kopfstück 5.1 stützt sich mit seiner Oberseite an der Innenwand der Nut ab. Auf die Außenseite des Trägerprofils 1 wirkt die Unterseite des Sicherungselementes 12.1. Die Riegel desselben greifen durch die Nutöffnung hindurch. Durch den durch die Durchbrechung 20 greifenden Keil 21 ist der Profilnutanschlussverbinder 4.1 sicher an das Trägerprofil 1 angeschlossen.

Figur 11 zeigt noch einen weiteren Profilnutanschlussverbinder 4.2 in einer perspektivischen Ansicht. Dieser ist ähnlich aufgebaut wie der Profilnutanschlussverbinder 4.1. Zum Verspannen desselben dient jedoch nicht ein Keil, der durch eine Durchbrechung eines Steges hindurch geführt wird, sondern ein Exzenterhebel 22. Figur 11 zeigt den Exzenterhebel 22 in seiner den Profilnutanschlussverbinder 1 an einem Trägerprofil verklemmenden Stellung. Die Schwenkachse 23 des Exzenterhebels 22 ist schematisiert in Figur 11 eingetragen. Figur 12 zeigt den Profilnutanschlussverbinder 4.2 angeschlossen an das Trägerprofil 1.

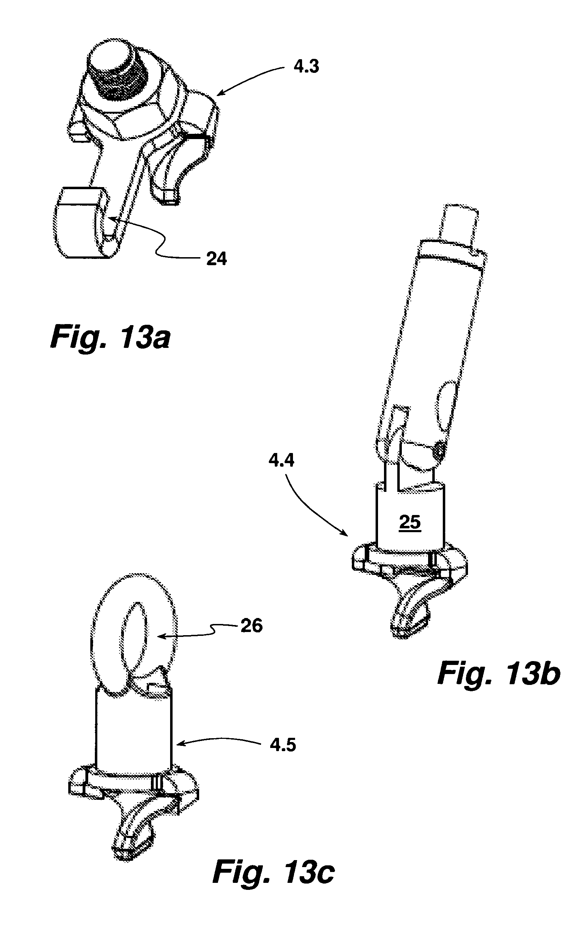

In den Figuren 13a bis 13c sind weitere Profilnutanschlussverbinder 4.3, 4.4, 4.5 als beispielhafte Ausgestaltungen gezeigt, bei denen der Profilnutanschlussverbinder 4.3, 4.4 bzw. 4.5 integraler Bestandteil eines funktionstragenden Bauteiles ist. Die Profilnutanschlussverbinder 4.3, 4.4 und 4.5 sind prinzipiell aufgebaut wie der Profilnutanschlussverbinder 4. Somit verfügt das jeweilige Kopfstück über einen Gewindeschaft, auf den eine Mutter zum Festsetzen des Sicherungselementes aufschraubbar ist. Beim Gegenstand des Profilnutanschlussverbinders 4.3 der Figur 13a ist angeformt an das Sicherungselement ein Haken 24. Im Falle des Profilnutanschlussverbinders 4.4 der Figur 13b ist die zum Sichern des Sicherungselementes dienende Mutter als erstes Teil 25 einer gelenkigen Verbindung ausgeführt. Dieser erste Teil 25 verfügt über ein Innengewinde, welches auf den Gewindeschaft am Kopfstück aufgeschraubt ist und das Sicherungselement mit dem Trägerprofil verspannt. Bei dem Profilnutanschlussverbinder 4.5 ist Teil der auf den Gewindeschaft aufschraubbaren Mutter eine Öse 26, wie dies in Figur 13c gezeigt ist. Diese Ausführungsbeispiele machen deutlich, dass, um einen Profilnutanschlussverbinder als integralen Bestandteil eines funktionstragenden Bauteiles auszugestalten, dieses Bauteil Teil des Sicherungselementes oder Teil des zum Verspannen dienenden Elementes ― hier: einer Mutter ― sein kann. Des Weiteren ist es möglich, das an das Kopfstück angeformte Teil ― bei dem dargestellten Ausführungsbeispiel als Schaft oder Steg ausgeführt ― zu nutzen, um daran einen funktionstragenden Gegenstand anzuformen und auf diese Weise diesen zum integralen Bestandteil des Profilnutanschlussverbinders zu machen.

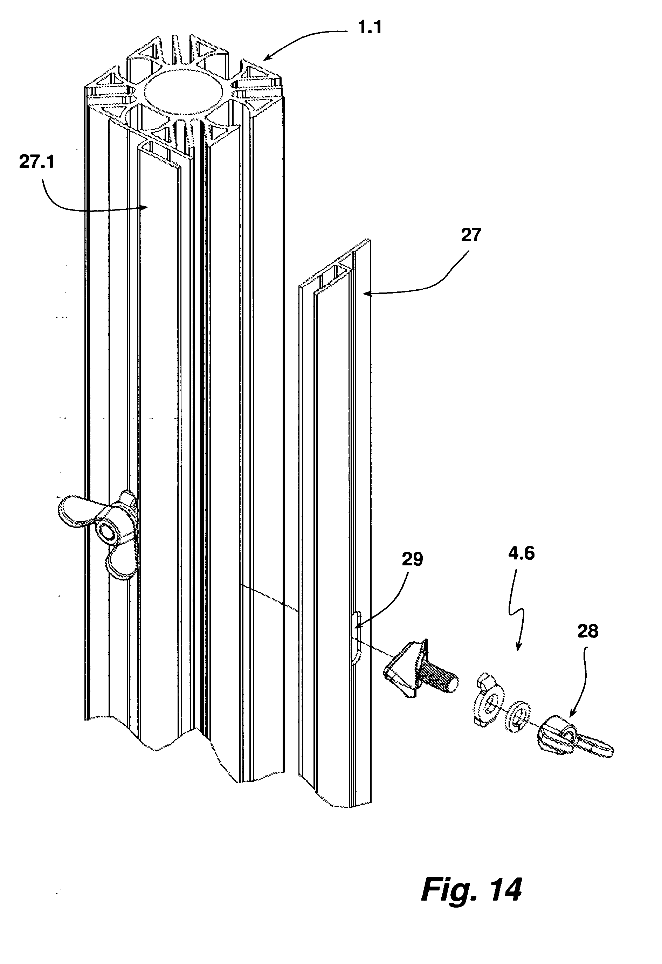

Figur 14 zeigt in einer Anordnung ein Trägerprofil 1.1, an welches zwei Leisten 27, 27.1 angeschlossen sind. Die Leiste 27 ist nach Art einer Explosionsdarstellung in Bezug auf das Trägerprofil 1.1 gezeigt. Bei dem Profilnutanschlussverbinder 4.6 zum Anschließen der Leiste 27 an das Trägerprofil 1.1 dient ein Profilnutanschlussverbinder 4.6, der prinzipiell wie der Profilnutanschlussverbinder 4 der Figuren 1 bis 8 aufgebaut ist. Dieser verfügt über eine Flügelmutter 28 zum Festsetzen des Profilnutanschlussverbinders 4.6 an dem Trägerprofil 1.1. Die Leiste 27 verfügt über ein Langloch 29 als Durchbrechung, durch die der Gewindeschaft des Profilnutanschlussverbinders hindurch greift. Gleichfalls dient das Langloch 29 zum Durchlassen der Riegel des Sicherungselementes des Profilnutanschlussverbinders 4.6. Die Leiste 27.1 ist in ihrer an das Trägerprofil 1.1 angeschlossenen Stellung gezeigt. Aufgrund der Konzeption ist es möglich, den Profilnutanschlussverbinder 4.6 durch das Langloch 29 hindurch zu montieren, sodass dieser nicht zunächst in die Nut des Trägerprofils 1.1 eingebracht werden muss, bevor die Leiste 27 oder 27.1 an das Trägerprofil 1.1 heran geführt wird. Es ist auf diese Weise daher möglich, die Leiste 27 an das Trägerprofil 1.1 mit dem Langloch 29 fluchtend mit der Nutöffnung zu halten, um sodann diese Leiste mittels eines oder auch mehrerer Profilnutanschlussverbinder 4.6 an dem Trägerprofil 1 festzusetzen.

In den vorstehenden Ausführungen ist die Erfindung anhand von Ausführungsbeispielen beschrieben worden. Ohne den Umfang der Ansprüche zu verlassen, ergeben sich für einen Fachmann zahlreiche weitere Möglichkeiten die Erfindung verwirklichen zu können, ohne dass dieses jedoch im Einzelnen dargelegt werden müsste.

### Bezugszeichenliste

- 1, 1.1: Trägerprofil
- 2, 2.1: Kederkanal
- 3, 3.1: Nutöffnung
- 4, 4.1, 4.2, 4.3, 4.4, 4.5, 4.6: Profilnutanschlussverbinder
- 5, 5.1: Kopfstück
- 6: Schaft
- 7: Außengewinde
- 8, 8.1: Wendelflügel
- 9: Fuß
- 10: Materialstärke
- 11, 11.1: Anschlagfläche
- 12, 12.1: Sicherungselement
- 13: Durchbrechung
- 14: Scheibe
- 15, 15.1: Riegel
- 16: Breite
- 17: Mutter
- 18: Verbinder
- 19: Steg
- 20: Durchbrechung
- 21: Keil
- 22: Exzenterhebel
- 23: Schwenkachse
- 24: Haken
- 25: Teil
- 26: Öse
- 27, 27.1: Leiste
- 28: Flügelmutter
- 29: Langloch

## Patentansprüche

1. Profilnutanschlussverbinder, umfassend einen Verbinder (18) mit einem Kopfstück (5, 5.1), ausgeführt zum Eingreifen in eine hinterschnittene Nut (2) eines Profils (1) und zum Einbringen des Kopfstückes (5, 5.1) in den Hinterschnitt der Nut (2) durch die der Längserstreckung des Profils (1) folgende Nutöffnung (3), und mit Mitteln zum Anschließen eines Gegenstandes an den Profilnutanschlussverbinder (4, 4.1, 4.2, 4.3, 4.4, 4,5, 4.6), sowie umfassend ein Sicherungselement (12) mit zumindest einem zum Eingreifen in die Nut (2) vorgesehenen Riegel (15, 15.1) zum Sichern des in den - Hinterschnitt der Nut (2) eingesetzten Kopfstückes (5, 5.1), **dadurch gekennzeichnet, dass** das Kopfstück (5, 5.1) als Wendel mit zumindest einem auskragenden Wendelflügel (8, 8.1) ausgeführt ist, dessen Spannweite größer und dessen Stärke kleiner als die lichte Weite der Öffnung (3) der Nut (2) und dessen Höhe kleiner als die lichte Höhe des Hinterschnittes der Nut (2) ist, und dass zum Sichern des in den Hinterschnitt der Nut (2) eingreifenden Kopfstückes (5, 5.1) des zumindest einen Riegels (15, 15.1) des Sicherungselementes (12, 12.1) mit zumindest einem auskragenden Wendelflügel (8, 8.1) zusammenwirkt.

2. Profilnutanschlussverbinder nach Anspruch 1, **dadurch gekennzeichnet, dass** die in Richtung der Öffnung (3) der Nut (2) weisende Oberseite des Wendelflügels (8, 8.1) des Kopfstückes (5, 5.1) der Innenkontur der Nut (2) angepasst ist.

3. Profilnutanschlussverbinder nach Anspruch 1 oder 2, **dadurch gekennzeichnet, dass** die Spannweite des Kopfstückes (5, 5.1) im Bereich seines Fußes (9) kleiner ist als im Bereich seines oberen, in Richtung der Öffnung (3) der Nut (2) weisenden Abschlusses.

4. Profilnutanschlussverbinder nach einem Ansprüche 1 bis 3, **dadurch gekennzeichnet, dass** die Materialstärke des Kopfstückes (5, 5.1) über die Erstreckung der Wendelflügel (8, 8.1) gleich oder annähernd gleich ausgeführt ist.

5. Profilnutanschlussverbinder nach einem der Ansprüche 1 bis 4, **dadurch gekennzeichnet, dass** die Wendel des Kopfstückes (5, 5.1) zwei einander bezüglich eines Schaftes oder Steges gegenüberliegende Wendelflügel (8, 8.1) aufweist.

6. Profilnutanschlussverbinder nach einem der Ansprüche 1 bis 5, **dadurch gekennzeichnet, dass** der zumindest eine Riegel (15, 15.1) des Sicherungselementes (12, 12.1) als in die Nut (2) einsetzbarer Fortsatz konzipiert und mit einer Breite ausgeführt ist, die im Wesentlichen der Breite der lichten Weite der Öffnung (3) der Nut (2) entspricht.

7. Profilnutanschlussverbinder nach einem der Ansprüche 1 bis 6, **dadurch gekennzeichnet, dass** das Sicherungselement (12) eine auf einen vom Kopfstück (5) abragenden Schaft (6) aufschiebbare Scheibe mit zumindest einem daran angewinkelt angeformten Fortsatz als Riegel (15, 15.1) umfasst.

8. Profilnutanschlussverbinder nach Anspruch 7, **dadurch gekennzeichnet, dass** die Scheibe (12) zwei aneinander bezüglich ihres Zentrums diametral gegen überliegend angeordnete Fortsätze als Riegel (15, 15.1) aufweist.

9. Profilnutanschlussverbinder nach Anspruch 7 oder 8, **dadurch gekennzeichnet, dass** der Schaft (6) des Profilnutanschlussverbinders ein Gewindeschaft ist und die Scheibe mittels einer auf dem Gewindeschaft sitzenden Mutter (17) gehalten ist und dass der Schaft (6) zugleich das Mittel zum Anschließen eines Gegenstandes an den Profilnutanschlussverbinder (4, 4.1, 4.2, 4.3, 4.4, 4,5, 4.6) darstellt.

10. Profilnutanschlussverbinder nach Anspruch 7 oder 8, **dadurch gekennzeichnet, dass** das Sicherungselement mittels eines Exzenters (22) oder eines Verriegelungskeils (21) in ihrer das Kopfstück (5.1) sichernden Stellung gehalten ist.

11. Anordnung umfassend ein Profil (1) mit zumindest einer hinterschnittenen, insbesondere als Kedernut (2) ausgeführten Nut und mit ein oder mehreren Profilnutanschlussverbindern (4, 4.1, 4.2, 4.3, 4.4, 4,5, 4.6) nach einem der Ansprüche 1 bis 10, die mit ihrem Kopfstück (5) in die Nut (2) eingreifen und mit dem Sicherungselement (12) gesichert darin gehalten sind.

## Claims

1. Profile nut connector, comprising a connector (18) with a head piece (5, 5.1), designed to engage an undercut nut (2) of a profile (1) and to introduce the head piece (5, 5.1) into the undercut of the nut (2) through the nut opening (3) which follows the longitudinal extension of the profile (1), and with means for connecting an object to the profile nut connector (4, 4.1, 4.2, 4.3, 4.4, 4,5, 4.6), and comprising a securing element (12) with at least one lock (15, 15.1), provided to engage the nut (2), for securing the head piece (5, 5.1) inserted into the undercut of the nut (2), **characterised in that** the head piece (5, 5.1) is designed as a coil with at least one cantilevered coil wing (8, 8.1) the span of which is greater and the thickness of which is smaller than the clear width of the opening (3) of the nut (2) and the height of which is smaller than the clear height of the undercut of the nut (2), and which, to secure the head piece (5, 5.1), said head piece engaging the undercut of the nut (2), of the at least one lock (15, 15.1) of the securing element (12, 12.1), interacts with at least one cantilevered coil wing (8, 8.1).

2. Profile nut connector according to claim 1, **characterised in that** the top of the coil wing (8, 8.1) of the head piece (5, 5.1), said top pointing in the direction of the opening (3) of the nut (2), is adapted to the inner contour of the nut (2).

3. Profile nut connector according to claim 1 or 2, **characterised in that** the span of the head piece (5, 5.1) in the area of its foot (9) is smaller than in the area of its upper termination which points in the direction of the opening (3) of the nut (2).

4. Profile nut connector according to any one of claims 1 to 3, **characterised in that** the material thickness of the head piece (5, 5.1) over the extension of the coil wings (8, 8.1) is designed identically or approximately identically.

5. Profile nut connector according to any one of claims 1 to 4, **characterised in that** the coil of the head piece (5, 5.1) has two coil wings (8, 8.1) opposite each other in respect of a shaft or web.

6. Profile nut connector according to any one of claims 1 to 5, **characterised in that** the at least one lock (15, 15.1) of the securing element (12, 12.1) is conceived as an extension which can be inserted into the nut (2) and is designed with a width which essentially corresponds to the width of the clear width of the opening (3) of the nut (2).

7. Profile nut connector according to any one of claims 1 to 6, **characterised in that** the securing element (12) comprises a disk which can be pushed onto a shaft (6) projecting from the head piece (5), said disk having at least one extension, as a lock (15, 15.1), integrally formed at an angle.

8. Profile nut connector according to claim 7, **characterised in that** the disk (12) has two extensions, as locks (15, 15.1), arranged diametrally opposite each other in respect of their centre.

9. Profile nut connector according to claim 7 or 8, **characterised in that** the shaft (6) of the profile nut connector is a threaded shaft and the disk is held by means of a nut (17) seated on the threaded shaft and that the shaft (6) at the same time represents the means for connecting an object to the profile nut connector (4, 4.1, 4.2, 4.3, 4.4, 4, 5, 4.6).

10. Profile nut connector according to claim 7 or 8, **characterised in that** the securing element is held by means of an eccentric element (22) or of a locking wedge (21) in their position that secures the head piece (5.1).

11. Arrangement comprising a profile (1) with at least one undercut nut, in particular designed as a keder nut (2), and with one or several profile nut connectors (4, 4.1, 4.2, 4.3, 4.4, 4,5, 4.6) according to any one of claims 1 to 10 which, with their head piece (5), engage the nut (2) and are held therein secured with the securing element (12).

## Revendications

1. Connecteur de raccordement de rainures profilées, comprenant un connecteur (18) avec une pièce de tête (5, 5.1), conçu pour s'engager dans une rainure (2) contre-découpée d'un profil (1) et pour mettre en place la pièce de tête (5, 5.1) dans la contre-découpe de la rainure (2) en passant par l'ouverture de rainure (3) qui suit le sens longitudinal du profil (1), et avec des moyens pour raccorder un objet au connecteur de raccordement de rainures profilées (4, 4.1, 4.2, 4.3, 4.4, 4.5, 4.6) et comprenant également un élément de sécurité (12) avec au moins un verrou (15, 15.1) prévu pour s'engager dans la rainure (2) afin de sécuriser la pièce de tête (5, 5.1) placée dans la contre-découpe de la rainure (2), **caractérisé en ce que** la pièce de tête (5, 5.1) est conformée en hélice, avec au moins une ailette hélicoïdale (8, 8.1) en saillie, dont la portée de serrage est plus grande et l'épaisseur plus petite que la largeur nette de l'ouverture (3) de la rainure (2) et que la pièce de tête (5, 5.1), laquelle s'engage dans la contre-découpe de la rainure (2), agit conjointement avec au moins une ailette hélicoïdale (8, 8.1), dans le but de la sécuriser sur l'élément de sécurité (12, 12.1) de l'au moins un verrou (15, 15.1).

2. Connecteur de raccordement de rainures profilées selon la revendication 1, **caractérisé en ce que** la face supérieure de l'ailette hélicoïdale (8, 8.1) de la pièce de tête (5, 5.1), orientée dans le sens de l'ouverture (3) de la rainure (2), est adaptée au contour intérieur de la rainure (2).

3. Connecteur de raccordement de rainures profilées selon la revendication 1 ou 2, **caractérisé en ce que** la portée de serrage de la pièce de tête (5, 5.1) au niveau de sa base (9) est plus petite qu'au niveau de son extrémité supérieure, orientée dans le sens d'ouverture (3) de la rainure (2).

4. Connecteur de raccordement de rainures profilées selon l'une des revendications 1 à 3, **caractérisé en ce que** l'épaisseur du matériau de la pièce de tête (5, 5.1) est identique ou sensiblement identique sur toute l'étendue de l'ailette hélicoïdale (8, 8.1).

5. Connecteur de raccordement de rainures profilées selon l'une des revendications 1 à 4, **caractérisé en ce que** l'hélice de la pièce de tête (5, 5.1) présente deux ailettes hélicoïdales (8, 8.1) opposées l'une à l'autre par rapport à un fût ou un montant.

6. Connecteur de raccordement de rainures profilées selon l'une des revendications 4 à 5, **caractérisé en ce qu'**au l'au moins un verrou (15, 15.1) de l'élément de sécurité (12, 12.1) est conçu en tant que prolongement pouvant être placé dans la rainure (2) et est réalisé dans une largeur qui correspond sensiblement à la largeur nette de l'ouverture (3) de la rainure (2).

7. Connecteur de raccordement de rainures profilées selon l'une des revendications 1 à 6, **caractérisé en ce que** l'élément de sécurité (12) comprend une rondelle qui peut être glissée sur une tige (6) en saillie sur la pièce de tête (5), et qui comprend au moins un prolongement moulé en angle sur celle-ci, faisant office de verrou (15, 15.1).

8. Connecteur de raccordement de rainures profilées selon la revendication 7, **caractérisé en ce que** la rondelle (12) présente par rapport à son centre, deux prolongements disposés de façon diamétralement opposée, faisant office de verrou (15, 15.1)

9. Connecteur de raccordement de rainures profilées selon la revendication 7 ou 8, **caractérisé en ce que** la tige (6) du connecteur de raccordement de rainures profilées est une tige filetée et que la rondelle est maintenue sur la tige filetée à l'aide d'un écrou (17) placé sur cette dernière et que la tige (6) constitue en même temps le moyen pour raccorder un objet au connecteur de raccordement de rainures profilées (4, 4.1, 4.2, 4.3, 4.4, 4.5, 4.6).

10. Connecteur de raccordement de rainures profilées selon la revendication 7 ou 8, **caractérisé en ce que** l'élément de sécurité est maintenu dans sa position qui sécurise la pièce de tête (5.1) au moyen d'un excentrique (22) ou d'une cale de verrouillage (21).

11. Agencement comprenant un profil (1) avec au moins une rainure réalisée par contre-découpe, notamment une rainure à bourrelet (2), et avec un ou plusieurs connecteurs de raccordement de rainures profilées (4, 4.1, 4.2, 4.3, 4.4, 4.5, 4.6) selon l'une des revendications 1 à 10, qui s'engagent par leur pièce de tête (5) dans la rainure (2) et qui y sont maintenus de façon sécurisée grâce à l'élément de sécurité (12).
